# EUROPÄISCHE PATENTSCHRIFT

(11) **EP 3 554 721 B1**
(45) Veröffentlichungstag und Bekanntmachung des Hinweises auf die Patenterteilung: **05.02.2020**
(21) Anmeldenummer: 18832983.3
(22) Anmeldetag: 11.12.2018
(51) Int. Cl.: B05D 5/06, B05D 7/00, B05D 3/02, C09D 5/29, C09D 5/36, C09D 5/38, B60B 7/00

(54) **VERFAHREN ZUM BESCHICHTEN VON KFZ-FELGEN**
METHOD FOR COATING MOTOR VEHICLE WHEEL RIMS
PROCÉDÉ DE REVÊTEMENT DE JANTES DE VÉHICULE AUTOMOBILE

(30) Priorität: 11.12.2017 DE 102017129434
(43) Veröffentlichungstag der Anmeldung: 23.10.2019
(73) Patentinhaber: Kucharska, Beate, 58456 Witten (DE)
(72) Erfinder: Kucharska, Beate, 58456 Witten (DE)
(74) Vertreter: Schneiders & Behrendt PartmbB Rechtsanwälte - Patentanwälte
(86) Internationale Anmeldenummer: PCT/EP2018/084268
(87) Internationale Veröffentlichungsnummer: WO 2019/115487

(56) Entgegenhaltungen:
- DE-A1-102006 048 631
- JP-A- 2005 152 841
- JP-A- 2007 126 116

## Beschreibung

Die Erfindung betrifft ein Verfahren zum Beschichten der Sichtflächen von Kfz-Felgen aus Aluminium oder Stahl, bei welchem auf die mechanisch bearbeitete metallische Oberfläche der Felge zunächst eine Polymergrundschicht (A) aufgebracht wird, welche die Unebenheiten der mechanischen Bearbeitung ausgleicht, anschließend auf die Oberfläche der Polymergrundschicht (A) eine Polymerzwischenschicht (B) aufgebracht wird, anschließend auf die Oberfläche der Polymerzwischenschicht (B) eine Dekorschicht (C) aufgebracht wird, die aus einer warm ausgehärteten Polymerschicht mit eingebetteten plättchenförmigen Metallpigmenten besteht, welche die Sichtflächen der Dekorschicht (C) abdecken, und abschließend die Oberfläche der Dekorschicht mit einer Polymerdeckschicht (D) abgedeckt wird.

Soweit in der vorliegenden Patentanmeldung von Polymerschichten die Rede ist, sind alle in der Kfz-Technik üblichen Lackbeschichtungen gemeint, deren physikalisch oder chemisch aushärtenden Filmbildner im Wesentlichen aus synthetischen Polymeren bestehen, wie z. B. Alcydharzen, Acrylharzen, Epoxidharzen, Polyesterharzen , Polyurethanharzen etc..

Verfahren der eingangs genannten Art sind beispielsweise aus der EP 2 123 366 A1, der WO 2013 041 395 A1 oder der JP 2007 126 116 A bekannt und zeichnen sich dadurch aus, dass sie verhältnismäßig kostengünstig sind. Bei diesen Verfahren wird unterhalb der Polymerdeckschicht eine Polymerschicht angeordnet, die plättchenförmige Metallpigmente (Flakes) enthält, welche den Metallglanz erzeugen sollen. Das optische Erscheinungsbild der so beschichteten Sichtflächen bleibt allerdings weit hinter dem Erscheinungsbild einer polierten metallischen Oberfläche zurück. Das ist möglicherweise darauf zurückzuführen, dass sich bei diesen Verfahren die plättchenförmigen Metallpigmente nicht ausreichend parallel zur Oberfläche ausrichten bzw. beim abschließenden Aufbringen der Polymerdeckschicht ihre parallele Ausrichtung zur Oberfläche verlieren.

Bei einem weiterhin aus der DE 10 2006 048 631 A1 bekannten Verfahren wird anstelle der plättchenförmigen Metallpigmente (Flakes) als Pigment der Dekorschicht ein feinkörniges, phlegmatisiertes Aluminiumpulver verwendet, welches natürlich ebenfalls keine hochglänzende metallische Oberfläche erzeugen kann.

Bei einem anderen, in der WO 2017/083730 A1 beschriebenen Verfahren, welches auch aus anderen Quellen bekannt ist, wird die metallisch glänzende Dekorschicht mithilfe von Metalldampf im PVD-Verfahren hergestellt. Diese Metalldampfschicht wird unmittelbar auf die bei diesem Verfahren hochglänzend ausgebildete Oberfläche der Polymerzwischenschicht aufgebracht und abschließend mit der Polymerdeckschicht abgedeckt. Dieses Beschichtungsverfahren, welches aus physikalischen Gründen nur im Vakuum bei 10⁻⁴ bis 10⁻⁵ mbar durchgeführt werden kann, erfordert aber aufwändige Apparaturen für die Erzeugung des Vakuums und des Metalldampfes, wodurch dieses Beschichtungsverfahren extrem kostspielig ist. Weiterhin besteht bei der so erzeugten Beschichtung die Gefahr, dass bei Verletzungen der Polymerdeckschicht (D) die darunter liegende, im Wesentlichen nur aus Metall bestehende Dekorschicht durch eine die Polymerdeckschicht (D) unterwandernde Oxidbildung beschädigt werden kann.

Ein sehr guter Metallglanz lässt sich schließlich noch mit der weiterhin nach dem Stand der Technik bekannten Galvanotechnik erreichen, wie sie beispielsweise in der DE 102 42 555 A1 oder der DE 10 2004 006 127 A1 beschrieben ist. Die dort beschriebene elektrochemische Abscheidung von metallischen Niederschlägen auf dem Substrat bzw. dessen Beschichtung ist allerdings im Hinblick auf die Umweltbelastung und die Entsorgungskosten problematisch.

Es ist deshalb Aufgabe der Erfindung, das besonders kostengünstige Verfahren der eingangs genannten Art dahingehend weiterzubilden, dass die nach diesem Verfahren beschichteten Felgen ohne wesentliche Mehrkosten das Erscheinungsbild von poliertem Metall erreichen.

Zur Lösung dieser Aufgabe schlägt die Erfindung ausgehend vom Verfahren der eingangs genannten Art vor, dass die Polymerzwischenschicht (B) mit einer hochglänzenden Oberfläche mit einem Glanzgrad nach DIN67530/ISO2813 von mehr als 95 hergestellt wird und dass die Dekorschicht (C) im Nass-Sprühverfahren mit einer Schichtdicke von maximal 2 µm auf die hochglänzende Oberfläche der Polymerzwischenschicht (B) aufgebracht wird, dort bei Umgebungstemperatur getrocknet wird und vor dem Aufbringen der Polymerdeckschicht (D) durch eine bei einer Temperatur von mehr als 140 °C erfolgende thermische Nachbehandlung mit einer Gitterschnitt-Abreißfestigkeit nach DIN EN ISO 2409 von Gt = 0 bis Gt = 2 an der Oberfläche der Polymerzwischenschicht (B) fixiert wird.

Die Sichtflächen von nach der Lehre der Erfindung beschichteten Kfz-Felgen aus Aluminium oder Stahl erreichen überraschenderweise ohne zusätzliche Behandlungsschritte das Erscheinungsbild von polierten metallischen Oberflächen, und zwar aus dem Metall, aus welchem die in der Dekorschicht verwendeten plättchenförmigen Metallpigmente bestehen. Infolgedessen ist es auf einfache Art und Weise möglich, den Felgen ein wählbares metallisches Aussehen zu geben, zum Beispiel das Aussehen von poliertem metallischem Aluminium, poliertem Kupfer, poliertem Messing oder poliertem Edelstahl.

Der erfindungsgemäß erreichte Effekt ist darauf zurückzuführen, dass die in der Dekorschicht (C) befindlichen plättchenförmigern Metallpigmente aufgrund der hochglänzenden Oberfläche der Polymerzwischenschicht, der besonderen Auftragstechnik (Nass-Sprühverfahren), der geringen Schichtdicke (2 µm), der Trocknung bei Umgebungstemperatur und der anschließenden thermischen Fixierung derart parallel zur Hochglanz-Oberfläche der Polymerzwischenschicht gehalten werden, dass sie beim abschließenden Aufbringen der abdeckenden Polymerdeckschicht (D) im Wesentlichen parallel zu dieser Hochglanz-Oberfläche verbleiben und somit den optischen Eindruck einer zusammenhängenden, polierten metallischen Oberfläche behalten. Die hohe Gitterschnitt-Abreißfestigkeit gibt dem gesamten Beschichtungspaket den erforderlichen Zusammenhalt.

Von besonderem Vorteil ist, dass für das Verfahren gemäß der Erfindung keine Vakuumsanlagen oder galvanischen Bäder benötigt werden und dass bei Beschädigung der Polymerdeckschicht kaum oxidative Schäden an den Metallpigmenten zu befürchten sind, weil diese jeweils einzelnen geschützt im Polymer der Dekorschicht (C) eingebettet sind.

Die thermische Fixierung der Dekorschicht (C) erfordert eine Mindesttemperatur von 140 °C. Eine besonders gute Fixierung wird erreicht, wenn diese thermische Fixierung bei Temperaturen zwischen 180 °C und 200 °C durchgeführt wird. Bei derart niedrigen Temperaturen sind mit Sicherheit keine Schäden am Metall der Felgen zu befürchten.

Eine zweckmäßige Weiterbildung der Erfindung sieht vor, dass der Dekorschicht (C) zusätzlich Farbpigmente zugesetzt werden. Hierdurch ist es möglich, der metallisch glänzend erscheinenden Oberfläche der Beschichtung zusätzliche Farbnuancen zu geben, die auf besondere Art und Weise den optischen Eindruck ergänzen können.

Der Eindruck einer metallisch polierten Oberfläche wird perfektioniert, wenn dafür Sorge getragen wird, dass die von den plättchenförmigen Metallpigmenten abgedeckte Fläche der Dekorschicht (C) absolut lückenlos ist. Um dies zu erreichen, ist es zweckmäßig, wenn die summierten dem Betrachter zugewandten Oberflächen der in der Dekorschicht (C) enthaltenen plättchenförmigen Metallpigmente um mindestens den Faktor 3 größer ist als die Fläche der Dekorschicht (C). Dies ist dadurch erreichbar, dass in den Schichtbildner der Dekorschicht (C) die plättchenförmigen Metallpigmente in ausreichender Menge eingebracht werden.

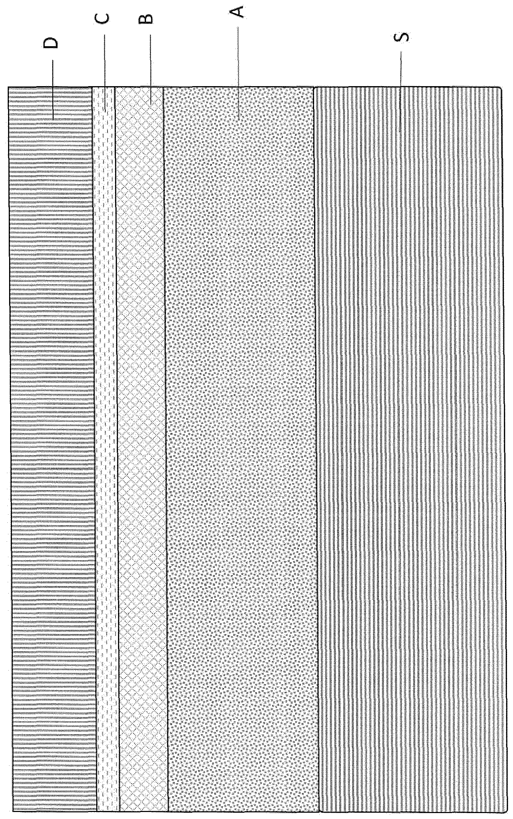

Ein Ausführungsbeispiel der Erfindung wird im Folgenden anhand der Zeichnung näher erläutert, in der ein Schnitt durch eine Beschichtung gemäß der Erfindung dargestellt ist.

In der Zeichnung ist das zu beschichtende Substrat, d. h. hier eine Kfz-Felge aus Aluminium oder Stahl, mit dem Bezugszeichen S bezeichnet.

Für die Durchführung des Verfahrens gemäß der Erfindung wird die zu beschichteten der Oberfläche dieses Substrates S zunächst mit den hierfür üblichen mechanischen Verfahren bearbeitet, d. h. so gut wie möglich geglättet und gereinigt.

Auf diese Oberfläche des Substrates es wird sodann - mit oder ohne chemische Vorbehandlung - mit den üblichen Verfahren eine Polymergrundierungsschicht A aufgebracht, welche die Unebenheiten der mechanischen Bearbeitung ausgleicht. Diese Polymergrundierungsschicht A enthält in ausreichender Menge Füllstoffe für den Ausgleich von groben Unebenheiten in der metallischen Oberfläche des Substrates.

Auf die Oberfläche dieser Polymergrundierungsschicht A wird danach als Polymerzwischenschicht B ein hochglänzender Pulverlack aufgebracht, wie er beispielsweise aus der DE 31 43 060 C2 bekannt ist. Von wesentlicher Bedeutung ist, dass die Oberfläche dieser Polymerzwischenschicht B wirklich hochglänzend ist, d. h. einen Glanzgrad nach DIN 67530/ISO 2813 von mehr als 95 hat. Solche hochglänzenden Oberflächen sind prinzipiell mit unterschiedlichen Lacksystemen erreichbar. Vorzugsweise wird beim Verfahren gemäß der Erfindung für die Polymerzwischenschicht B ein PU-Pulverlacksystem zum Einsatz gebracht.

Auf die Polymerzwischenschicht B wird anschließend eine Dekorschicht C aufgebracht, deren Schichtbildner ein thermisch aushärtbares Polymer ist und als Dekor plättchenförmige Metallpigmente, sogenannte Flakes, enthält, welche die Sichtfläche der Dekorschicht C abdecken. Diese Dekorschicht C wird im Nass-Sprühverfahren mit einer Schichtdicke von maximal 2 µm auf die hochglänzende Oberfläche der Polymerzwischenschicht B aufgebracht und besteht aus einer in dieser Schichtdicke bei einer Umgebungstemperatur von 15 °C bis 25 °C in weniger als 10 Sekunden trocknenden Beschichtungsmasse. Diese Beschichtungsmasse wird nach dem Trocknen durch Erwärmung auf eine Temperatur von mindestens 140 °C, vorzugsweise von 180 °C bis 200 °C, an der Hochglanz-Oberfläche der Polymerzwischenschicht B fixiert, derart, dass sich an der Oberfläche der Polymerzwischenschicht B eine Gitterschnitt-Abreißfestigkeit nach DIN EN ISO 2409 von Gt = 0 bis Gt = 2 ergibt.

Beschichtungsmassen mit diesen physikalischen Eigenschaften sind in unterschiedlicher Ausführung am Markt erhältlich.

Die in der erfindungsgemäß sehr dünnen Dekorschicht C enthaltenen plättchenförmigen Metallpigmente orientieren sich beim Verfahren gemäß der Erfindung im Wesentlichen parallel zu der hochglänzenden Oberfläche der Polymerzwischenschicht B und erzeugen hierdurch den optischen Eindruck einer zusammenhängenden, polierten metallischen Oberfläche. Dadurch, dass die Dekorschicht C zusätzlich durch die oben erläuterte Erwärmung an der hochglänzenden Oberfläche der Polymerzwischenschicht fixiert wird, geht diese Orientierung auch beim abschließenden Aufbringen der Polymerdeckschicht D nicht verloren.

Optimal wird der Eindruck einer zusammenhängenden polierten metallischen Oberfläche dann, wenn summierten, dem Betrachter zugewandten Oberflächen der in der Dekorschicht C enthaltenen plättchenförmigen Metallpigmente mindestens um den Faktor 3 größer als die Fläche der Dekorschicht C ist

Wenn zusätzlich dekorative Farbeffekte gewünscht sind, können dem Filmbildner der Dekorschicht C weiterhin zusätzliche Farbpigmente beigemischt werden.

Die abschließend aufgebrachte Polymerdeckschicht D hat die bei solchen Beschichtungssystemen üblichen Eigenschaften und schützt die gesamte Beschichtung einschließlich dem beschichteten Substrat gegen mechanische Beschädigungen wie Steinschlag oder dergleichen.

## Patentansprüche

1. Verfahren zum Beschichten der Sichtflächen von Kfz-Felgen aus Aluminium oder Stahl, bei welchem
- auf die mechanisch bearbeitete metallische Oberfläche der Felge zunächst eine Polymergrundierungsschicht (A) aufgebracht wird, welche die Unebenheiten der mechanischen Bearbeitung ausgleicht,
- anschließend auf die Oberfläche der Polymergrundierungsschicht (A) eine Polymerzwischenschicht (B) aufgebracht wird,
- anschließend auf die Oberfläche der Polymerzwischenschicht (B) eine Dekorschicht (C) aufgebracht wird, die aus einer warm ausgehärteten Polymerschicht mit eingebetteten plättchenförmigen Metallpigmenten besteht, welche die Sichtfläche der Dekorschicht (C) abdecken,
und abschließend die Oberfläche der Dekorschicht (C) mit einer Polymerdeckschicht (D) abgedeckt wird,
**dadurch gekennzeichnet,**
**dass** die Polymerzwischenschicht (B) mit einer hochglänzenden Oberfläche mit einem Glanzgrad nach DIN67530/ISO2813 von mehr als 95 hergestellt wird,
- **dass** die Dekorschicht (C) im Naß-Sprühverfahren mit einer Schichtdicke von maximal 2 µm auf die hochglänzende Oberfläche der Polymerzwischenschicht (B) aufgebracht und dort bei Umgebungstemperatur getrocknet wird
- und **dass** die Dekorschicht (C) vor dem Aufbringen der Polymerdeckschicht (D) durch eine bei einer Temperatur von mehr als 140 °C erfolgende thermische Nachbehandlung mit einer Gitterschnitt-Abreißfestigkeit nach DIN EN ISO 2409 von Gt = 0 bis Gt = 2 an der Oberfläche der Polymerzwischenschicht (B) fixiert wird.

2. Verfahren nach Anspruch 1, **dadurch gekennzeichnet, dass** die thermische Nachbehandlung der Dekorschicht (C) mit einer Temperatur von 180 °C bis 200 °C durchgeführt wird.

3. Verfahren den Ansprüchen 1 oder 2, **dadurch gekennzeichnet, dass** der Dekorschicht (C) zusätzlich Farbpigmente hinzugesetzt werden.

4. Verfahren nach Anspruch 1 oder einem der nachfolgenden Ansprüche, **dadurch gekennzeichnet, dass** die summierten, dem Betrachter zugewandten Oberflächen der in der Dekorschicht (C) enthaltenen plättchenförmigen Metallpigmente um mindestens den Faktor 3 größer als die Fläche der Dekorschicht (C) sind.

## Claims

1. Method for coating the visible surfaces of motor vehicle wheel rims made of aluminium or steel, in which
- a polymer primer layer (A) is first applied to the mechanically processed metal surface of the wheel rim, which layer evens out the irregularities of the mechanical processing,
- then a polymer intermediate layer (B) is applied to the surface of the polymer primer layer (A),
- then a decorative layer (C) is applied to the surface of the polymer intermediate layer (B), which decorative layer consists of a thermally cured polymer layer with embedded platelet-shaped metal pigments, which cover the visible surface of the decorative layer (C),
and finally the surface of the decorative layer (C) is covered by a polymer topcoat (D),
**characterised in that**
the polymer intermediate layer (B) is produced with a high-gloss surface with a gloss grade according to DIN67530/ISO2813 of more than 95,
- that the decorative layer (C) is applied by wet spraying with a layer thickness of a maximum of 2 µm to the high-gloss surface of the polymer intermediate layer (B) and is dried there at ambient temperature
- and that prior to the application of the polymer topcoat (D), the decorative layer (C) is fixed on the surface of the polymer intermediate layer (B) by a thermal post-treatment at a temperature of more than 140°C with a cross-cut tear strength according to DIN EN ISO 2409 of Gt = 0 to Gt = 2.

2. Method according to claim 1, **characterised in that** the thermal post-treatment of the decorative layer (C) is carried out at a temperature of 180°C to 200°C.

3. Method according to claims 1 or 2, **characterised in that** colour pigments are additionally added to the decorative layer (C).

4. Method according to claim 1 or one of the following claims, **characterised in that** the combined surfaces of the platelet-shaped metal pigments contained in the decorative layer (C) and facing the observer are greater by at least the factor 3 than the area of the decorative layer (C).

## Revendications

1. Procédé servant à revêtir les surfaces visibles de jantes de véhicule automobile en aluminium ou en acier, où
- en premier lieu une couche d'apprêt polymère (A) est appliquée sur la face supérieure métallique usinée mécaniquement de la jante, laquelle compense les irrégularités de l'usinage mécanique,
- puis une couche intermédiaire polymère (B) est appliquée sur la face supérieure de la couche d'apprêt polymère (A),
- puis une couche décorative (C) est appliquée sur la face supérieure de la couche intermédiaire polymère (B), laquelle consiste en une couche polymère durcie à chaud avec des pigments métalliques incorporés en forme de plaquettes, lesquels recouvrent la surface visible de la couche décorative (C),
et puis la face supérieure de la couche décorative (C) est recouverte d'une couche de recouvrement polymère (D),
**caractérisé en ce**
**que** la couche intermédiaire polymère (B) est fabriquée avec une face supérieure ultra-brillante avec un degré de brillance selon la norme DIN67530/ISO2813 supérieur à 95,
- **que** la couche décorative (C) est appliquée lors du procédé de pulvérisation par voie humide en une épaisseur de couche de 2 µm au maximum sur la face supérieure ultra-brillante de la couche intermédiaire polymère (B) et y est séchée à température ambiante
- et **que** la couche décorative (C) est fixée avant l'application de la couche de recouvrement polymère (D) par un traitement ultérieur thermique effectué à une température supérieure à 140 °C avec une résistance au quadrillage et à l'arrachement selon la norme DIN EN ISO 2409 Gt = 0 à Gt = 2 au niveau de la face supérieure de la couche intermédiaire polymère (B).

2. Procédé selon la revendication 1, **caractérisé en ce que** le traitement ultérieur thermique de la couche décorative (C) est mis en œuvre avec une température de 180 °C à 200 °C.

3. Procédé selon les revendications 1 ou 2, **caractérisé en ce que** des pigments de couleur sont ajoutés en supplément à la couche décorative (C).

4. Procédé selon la revendication 1 ou l'une quelconque des revendications suivantes à celle-ci, **caractérisé en ce que** les faces supérieures, cumulées tournées vers l'observateur, des pigments métalliques en forme de plaquettes contenus dans la couche décorative (C) sont supérieures d'au moins le facteur 3 à la superficie de la couche décorative (C).
